# EUROPÄISCHE PATENTSCHRIFT

(11) **EP 0 812 445 B1**
(45) Veröffentlichungstag und Bekanntmachung des Hinweises auf die Patenterteilung: **09.06.1999**
(21) Anmeldenummer: 96903902.3
(22) Anmeldetag: 27.02.1996
(51) Int. Cl.: G06K 15/02

(54) **VORRICHTUNG ZUR STEIGERUNG DER DRUCKQUALITÄT IN HOCHGESCHWINDIGKEITSDRUCK- UND KOPIERGERÄTEN**
DEVICE FOR INCREASING PRINT QUALITY IN HIGH-SPEED PRINTING AND COPYING MACHINES
DISPOSITIF D'AMELIORATION DE LA QUALITE D'IMPRESSION DANS LES IMPRIMANTES ET LES COPIEUSES A GRANDE VITESSE

(30) Priorität: 27.02.1995 DE 19506791
(43) Veröffentlichungstag der Anmeldung: 17.12.1997
(73) Patentinhaber: Océ Printing Systems GmbH, 85586 Poing (DE)
(72) Erfinder: MORRIS, Edward, D-85435 Erding (DE); SCHMIDT, Thomas, D-85567 Grafing (DE)
(74) Vertreter: Schaumburg, Thoenes & Thurn
(86) Internationale Anmeldenummer: DE9600323
(87) Internationale Veröffentlichungsnummer: WO9627167

(56) Entgegenhaltungen:
- EP-A- 0 508 727
- EP-A- 0 526 738
- EP-A- 0 569 657
- EP-A- 0 583 873
- DE-C- 19 506 791
- PATENT ABSTRACTS OF JAPAN vol. 016, no. 403 (E-1254), 26.August 1992 & JP,A,04 134956 (CANON INC), 8.Mai 1992,

## Beschreibung

Die Wiedergabe beliebiger Bilddaten mit digitalen Ausgabegeräten, wie z.B. Monitoren, Flüssigkristallanzeigen und Matrix- oder Laserdruckern erfolgt durch eine große Anzahl einzelner Pixel. Diese Pixel sind meist in einem orthogonalen Grundraster angeordnet. Jedes Pixel kann durch seine Koordinaten innerhalb des Grundrasters und durch seine Eigenschaften, wie z.B. Farbe, Intensität und Größe beschrieben werden. Die Weite des Grundrasters wird im allgemeinen durch die Anzahl der Pixel je Zoll, dpi (dots per inch), beschrieben.

Binäre Ausgabegerate können nur einen einzigen Pixeltyp erzeugen. Hier gilt für jede Position des Grundrasters: Pixel gesetzt oder nicht gesetzt. Zur Wiedergabe eines analogen Bildes muß dieses zunächst entsprechend dem Grundraster des Ausgabegeräts diskretisiert werden. Dabei werden Linien und Konturen beliebiger Orientierung in treppenartige Strukturen umgewandelt. Je geringer die Auflösung des Ausgabegerätes ist, desto deutlicher werden diese Stukturen sichtbar und wirken sich störend auf den Gesamteindruck der digitalen Wiedergabe aus.

Die Qualität einer Ausgabeeinrichtung wird deshalb häufig durch ihr Grundraster, bei einem Drucker spricht man von der Druckauflösung, bestimmt. Ein Drucker wird allgemein beispielsweise als 300 dpi- oder 600 dpi-Drucker bezeichnet. Ein 600 dpi-Drucker hat eine höhere Auflösung als ein 300 dpi-Drucker und liefert deshalb gewöhnlich eine bessere Ausgabequalität. Dies ist jedoch nicht immer gegeben, da andere Faktoren, wie z.B. der Durchmesser von Pixeln sich ebenfalls auf die erreichbare Druckqualität auswirken. Insbesondere, wenn die Druckauflösung 600 dpi übersteigt, kann man feststellen, daß ein 600 dpi-Drucker mit variabler Punktgröße eine höhere Ausgabequalität erzeugt, als ein 1200 dpi-Drucker mit einer festen Pixelgröße.

Die tatsächlich realisierte Auflösung des Ausgabegeräts wird durch die entstehenden Kosten bestimmt. Wesentliche Einflußgrößen sind zum einen die mechanische Präzision des Ausgabegeräts und der Aufwand an Elektronik zur Aufbereitung und Ausgabe der wiederzugebenden Daten. Jede Verdoppelung der Auflösung hat eine Vervierfachung der zu verarbeitenden Datenmenge zur Folge.

Im Normalfall erfolgt die Diskretisierung des analogen Bildes im Grundraster des Ausgabegerätes. In mindestens zwei Anwendungsfällen kann es aber auch vorkommen, daß die Auflösung des Ausgabegerätes größer ist als die des auszugebenden diskretisierten Bildes: 1. Das Bild liegt in einer anderen Auflösung bereits vor oder 2. Das Bild kann aus technologischen Gründen nur in geringer Auflösung diskretisiert werden.

Dem Rastergenerator eines Drucker, wie er beispielsweise aus US-A-5 012 434 bekannt ist, wird von einem HOST-System die kodierte und komprimierte Bildinformation in Form von Befehlen einer standardisierten Sprache, wie z.B. IPDS (Intelligent Printer Data Stream) von IBM, PCL (Printer Command Language) von Hewlett Packard oder Postscript® (Page Description Language) von Adobe, übergeben. Der Rastergenerator hat die Aufgabe, das endgültige Pixelraster zu erzeugen, das durch die Druckeinheit auf das Papier übertragen wird. Die Rasterauflösung, die vom Rastergenerator erzeugt wird, hängt nicht nur vom Format der vom HOST eingehenden Daten ab, sondern auch von der maximalen druckbaren Auflösung.

Ein typischer Anwendungsfall ist ein Bild, das mit 300 dpi-Auflösung vom HOST eintrifft und mit 600 dpi-Auflösung dargestellt wird. Das Bild mit 600 dpi-Auflösung enthält viermal so viele Daten wie das gleiche Bild, das mit 300 dpi-Auflösung beschrieben ist. Infolgedessen sind der Speicherbedarf und die Anforderungen an die Leistungsfähigkeit des Rastergenerators beim 600 dpi-Druck beträchtlich erhöht, was zu einer Erhöhung der Kosten für die elektronische Hardware des Druckers führt. Würde lediglich jedes Pixel mit 300 dpi-Auflösung durch 2*2 Pixel mit 600 dpi-Auflösung ersetzt, dann entspräche ein ausgegebenes Druckbild weitgehend dem eines Ausgabegerätes mit 300 dpi-Auflösung. Die Treppenstrukturen des 300 dpi-Bildes bleiben praktisch erhalten. Die Vorteile des hochauflösenden Ausgabegerätes blieben ungenutzt.

In den letzten Jahren wurden deshalb verschiedene Wege zur Steigerung der Druckqualität aufgezeigt. Solche Wege sind in US-A-4 847 641, US-A-5 029 108, EP-A-0 500 375, EP-A-0 521 491 und EP-A-0 526 738 angegeben. Die drei erstgenannten Lösungen wurden für Laserdrucker optimiert, die ein Ablenkungssystem für einen einzelnen Strahl aufweisen. Das Videosignal, das die Laserdiode steuert, wird einem Verbesserungsschaltkreis in serieller Form zugeführt. Das Videosignal kann von diesem Schaltkreis entweder in unveränderter Form zur Laserdiode durchgeschleift werden oder moduliert werden, wenn Kantenglättung erforderlich ist. Eine Erhöhung der Druckauflösung wird nur dann vorgenommen, wenn der Verbesserungsschaltkreis eine Gruppe von Pixeln erkennt, für die feinere Punkte gedruckt werden sollten.

In Druckern, die, wie aus EP-A-0 521 491 und EP-A-0 526 738 bekannt, einen LED-Zeichengenerator enthalten, ist es stets erforderlich, die genaue Anzahl von Datenbits anzubieten, die durch die Anzahl der LED's im LED-Kamm des Zeichengenerators bestimmt ist. Anders als bei Druckern mit einer optischen Laserablenkungseinheit erhöhen sich die Druckkopfkosten in signifikanter Weise, wenn beispielsweise anstelle eines 300 dpi-Druckkopfes ein 600 dpi-Druckkopf verwendet wird. Beim genannten Stand der Technik wird das Problem dadurch umgangen, daß eine Erhöhung der Auflösung nur in Papiertransportrichtung erfolgt, die im rechten Winkel zur Achse des LED-Kamms steht. Die Auflösung in Richtung der Achse des Druckkamms bleibt unverändert. Da der Original 300 dpi-Druckkopf noch bei höheren Schaltfrequenzen verwendet werden kann, ist eine erhöhte Auflösung bei niedrigen Kosten erreichbar. Die Erhöhung der Auflösung gelingt allerdings nur in einer Richtung.

Eine Erhöhung der Auflösung in zwei Richtungen ist aus EP-A-0 584 966 bekannt. Abhängig von einer Eingangsinformation, die angibt, ob es sich um ein Grauwertbild oder ein Schwarz-Weiß-Bild handelt, wird eine Kantenglättung vorgenommen bzw. nicht vorgenommen. Bei Grauwertbildern besteht die Annahme, daß das Bild durch Kantenglättung in nachteiliger Weise verändert wird. Liegt ein Schwarz-Weiß-Bild vor, dann wird mittels einer endlichen Anzahl von Schablonen festgestellt, durch welches 2*2-Pixel einer höheren Auflösung ein ausgewähltes Pixel einer niederen Auflösung ersetzt werden soll. Die Schablonen können zum Zweck einer Einsparung von logischen Gattern an einer Y-Achse gespiegelt und um +90° oder um -90° gedreht werden. Beim Stand der Technik kann somit beispielsweise die Wiedergabe einer aufsteigenden Linie verbessert werden. Die Darstellung einer abfallenden Linie kann jedoch aufgrund einer fehlenden Spiegelung der Schablonen an einer X-Achse nicht verbessert werden. Die aufgezeigte Lösung eignet sich zudem nur für langsame Drucker, wie z.B. Tischdrucker.

Aus EP-A-0 356 224 ist eine Datenverarbeitungseinheit bekannt, die einen Bereich zur Bildaufbereitung und einen Bereich zur Interpolation von Bildinformationen enthält. Bei unveränderter Gesamtauflösung von beispielsweise 300 dpi werden mehrere ein umzusetzendes Pixel umgebende Zeilen zum Gewinnen einer Glättungsinformation herangezogen. Zur Glättung werden sowohl eine Modulation der Größe eines Pixels, als auch eine Verschiebung des Zentrums eines Pixels herangezogen, wie sie nur bei Bildwiedergabeeinrichtungen mit Laserablenkungseinheit einsetzbar ist.

Aus US-A-4 437 122 ist ein Verfahren zur Erhöhung der Rasterauflösung bekannt. Zur Umsetzung eines Pixels in mehrere Pixel eines feineren Rasters werden in einer 3*3-Matrix die das Pixel unmittelbar umgebenden Pixel herangezogen. Der 3*3-Matrix wird entsprechend ihrer Belegung mit schwarzen und weißen Pixeln ein Identifikator zugeordnet, der mit entsprechenden Identifikatoren verglichen wird. Ist ein passender Identifikator gefunden, wird das zentrale Pixel der 3*3-Matrix durch ein diesen Identifikator zugeordnetes Pixelmuster des feineren Rasters ersetzt. Bei diesem Verfahren sind 2^{(3*3)} = 512 Identifikatoren erforderlich. Vergrößert man den Bereich der Umgebungspixel beispielsweise auf eine 7*7-Matrix, dann wären 2^{(7*7)} = 5,629499*10¹⁴ Identifikatoren und entsprechende Pixelmuster des feineren Rasters zur Umsetzung erforderlich. Ein solches Verfahren ist in einem Hochleistungsdruck- oder Kopiergerät aus Zeit- und Speicherplatzgründen nicht einsetzbar.
Aus der EP 526 738 A2 ist ebenfalls ein Verfahren zur Erhöhung der Rasterauflösung bekannt, bei dem die Bilddaten zeilenweise verarbeitet werden.
Der elementare Nachteil aller früheren Lösungen ist, daß sie nur in vergleichsweise langsamen Druckern mit niedriger Leistungsfähigkeit verwendbar sind. Wenn zur Verbesserung der der Bildwiedergabe die Druckauflösung in beiden Richtungen erhöht werden soll, dann übersteigt die Datenverarbeitungsrate schnell die Möglichkeiten der bekannten Technologie. Die Daten der Bildinformation werden seriell verarbeitet. Eine Geschwindigkeitssteigerung wird bei bekannten Lösungen dadurch erreicht, daß entweder partiell auf eine Glättung verzichtet wird, oder generell die Druckauflösung nur in eine Richtung, der X- und der Y-Richtung, erhöht wird.

Der vorliegenden Erfindung liegt die Aufgabe zugrunde, eine Vorrichtung zur Steigerung der Druckqualität in Hochgeschwindigkeitsdruck- und kopiergeräten aufzuzeigen, die bei geringer Anzahl von Komponenten eine zuverlässige Umsettung von Bildinformationen niedriger Auflösung in Bildinformationen hoher Auflösung ermöglicht.

Diese Aufgabe wird durch die im Patentanspruch 1 angegebenen Merkmale gelöst. Vorteilhafte Ausgestaltungen und Weiterbildungen der Erfindung sind in Unteransprüchen angegeben.

Die Erfindung erlaubt parallele Bildinformationsverarbeitung zur Umsetzung von Bildinformationen niedriger Auflösung in Bildinformationen höherer Auflösung. Dazu werden die Bildinformationen beispielsweise über einen mehrere Bit breiten Bus im parallelen Format an die Registereinheit übergeben. Damit werden wesentlich höhere Durchgangsraten der Daten erreicht, als dies beim Stand der Technik möglich ist. Jedes Datenwort wird durch die Registereinheit getaktet, so daß zu jedem Zeitpunkt beispielsweise etwa sieben aufeinanderfolgende Zeilen niedriger Auflösung in dieser Registereinheit gespeichert sind. Nicht mehr benötigte Pixel werden am Ende der Registereinheit verworfen. Diese Registereinheit erlaubt es, daß auf mindestens ein Pixel des Datenwortes, das sich im Zentrum der Matrix befindet und auf alle anderen Pixel, die das umzusetzende Pixel physikalisch unmittelbar und mittelbar umgeben, durch die Entscheidungseinheit zum Verarbeiten zugegriffen werden kann. Die Umgebungs-Pixel werden benötigt, um die Entscheidungseinheit zu befähigen, aus den niedrig aufgelösten Bildinformationen ein optimales Raster hoher Auflösung zu generieren.

Vorzugsweise arbeiten einige Entscheidungseinheiten parallel zueinander, um eine Echtzeitverarbeitung aller Datenbits in einem Datenwort zu erlauben. Die hochaufgelösten Bildinformationen können dann synchron zu den Daten der Rastereinheit ausgegeben werden, obwohl sie um einige Druckzeilen verzögert sind. Durch die erfindungsgemäße Vorrichtung ist es damit möglich, alle Bits eines Datenwortes, die im Zentrum einer Matrix angeordnet sind, viele Datentaktzyklen vor Übergabe an den an die Bildwiedergabeeinheit gleichzeitig in das hochauflösende Format umzusetzen. Dies erlaubt die Verarbeitung von Daten in viel größeren Durchgangsraten als mit bekannten Einrichtungen.

Darüber hinaus enthalten die Entscheidungseinheiten Verbesserungsalgorithmen, die die Klarheit der resultierenden hochaufgelösten Bilder verbessern. Die Anzahl der hochaufgelösten Datenbits, die erzeugt werden können, ist abhängig von der Anzahl der niedrig aufgelösten Datenbits, die verarbeitet werden und vom Skalierungsfaktor zwischen niedriger und hoher Auflösung des Bildrasters. Wenn die hochauflösende Bildwiedergabeeinheit in der Lage ist, den Durchmesser der darzustellenden Pixel zu modulieren, dann kann mit Hilfe der Erfindung auch eine Vielzahl von hochaufgelösten Daten erzeugt werden, die den Durchmesser jedes hochaufgelösten Pixels spezifizieren.

Die resultierenden hochaufgelösten Bildinformationen werden auf einen getrennten parallelen Bus zu einer Ausgabeeinheit ausgegeben. Mittels eines einfachen Adreßdekoders können die hochaufgelösten Daten von dieser Ausgabeeinheit ausgelesen und zur Bildwiedergabeeinheit im gewünschten parallelen Bitformat transferiert werden.

Durch ein optionales Hinzufügen von Multiplexern zu den Registern der Registerkette kann ein Vermischen der Daten zwischen zwei unterschiedlichen Seiten einer Bildinformation, die gedruckt werden sollen, an deren Anfang und Ende vermieden werden.

Die erfindungsgemäße Vorrichtung kann sowohl in xerografischen Druckern, wie z.B. Laserdruckern mit Laser- oder LED-Druckkopftechnologie als auch mit Punktmatrixdruckern verwendet werden. Die Funktionseinheit der Vorrichtung kann in diskreter Logik oder in Form einer kundenspezifischen integrierten Schaltung für den Einsatz in speziellen Systemen (ASIC) aufgebaut sein.

Im Folgenden wird die Erfindung anhand der Zeichnung näher erläutert. Dabei zeigen
- Figur 1a: eine Matrix auszugebender Bildinformationen in einer groben Auflösung,
- Figur 1b: eine Matrix auszugebender, nicht geglätteter Bildinformationen in einer hohen Auflösung,
- Figur 1c: eine Matrix auszugebender, geglätteter Bildinformationen in einer hohen Auflösung,
- Figur 2: alle möglichen Kombinationen von Pixeln einer Matrix, mit doppelter Auflösung, durch die Pixel der groben Auflösung ersetzt werden können,
- Figur 3: eine Matrix mit sieben Spalten und sieben Zeilen, deren zentrales Pixel in eine hochaufgelöste Pixelkombination umzusetzen ist,
- Figur 4: eine Blockdarstellung der Funktionseinheiten zur Druckbildaufbereitung,
- Figur 5: ein Blockschaltbild einer Registerkette eines Parallelbus-FIFO-Speichers zur Aufnahme einer Druckzeile,
- Figur 6: ein Blockschaltbild eines Parallelbus-FIFO-Speiches, der mehrere Registerketten gemäß Figur 5 enthält,
- Figur 7: eine matrixartige Darstellung des Parallelbus-FIFO-Speichers gemäß Figur 6,
- Figur 8: eine ausschnittsweise Darstellung eines Blockschaltbildes einer Entscheidungseinheit, die mit dem Parallelbus-FIFO-Speicher gemäß Figur 6 koppelbar ist,
- Figur 9: ein Blockschaltbild eines Ausgangsschaltkreises der mit der Entscheidungseinheit gemäß Figur 8 koppelbar ist.
- Figur 10: eine ausschnittsweise Darstellung eines Blockschaltbildes einer Funktionseinheit, die mit dem Parallelbus-FIFO-Speicher gemäß Figur 6 koppelbar ist, und
- Figur 11: ein Blockschaltbild eines Ausgangsschaltkreises der mit der Funktionseinheit gemäß Figur 10 koppelbar ist.

Gemäß dem Ausführungsbeispiel wird eine in Matrixform vorliegende Druckinformation mit einer niedrigen Auflösung von 300 dpi in eine matrixartige Bildinformation mit einer hohen Auflösung von 600 dpi aufgezeigt. Dies entspricht einer Verdoppelung der Auflösung. Mit Hilfe der erfindungsgemäßen Vorrichtung sind jedoch beliebige andere Verfeinerungen, beispielsweise von 180 auf 300 dpi oder von 240 auf 600 dpi möglich.

Einem Drucker mit einer Auflösung von 600 dpi werden Bildinformationen mit einer Auflösung von 300 dpi zugeführt. Figur la zeigt einen Ausschnitt aus einer solchen Matrix mit sechs Spalten 1 bis 6 und sechs Zeilen S1 bis S6. Einzelne Pixel P dieser Matrix sind gesetzt. Die gesetzten Pixel P, wie beispielsweise das der Spalte 2 in der Zeile S2, sind geschwärzt dargestellt. Die nicht geschwärzten Pixel P, wie z.B. das der Spalte 4 in der Zeile S4, weisen in der Figur keine Schwärzung auf.

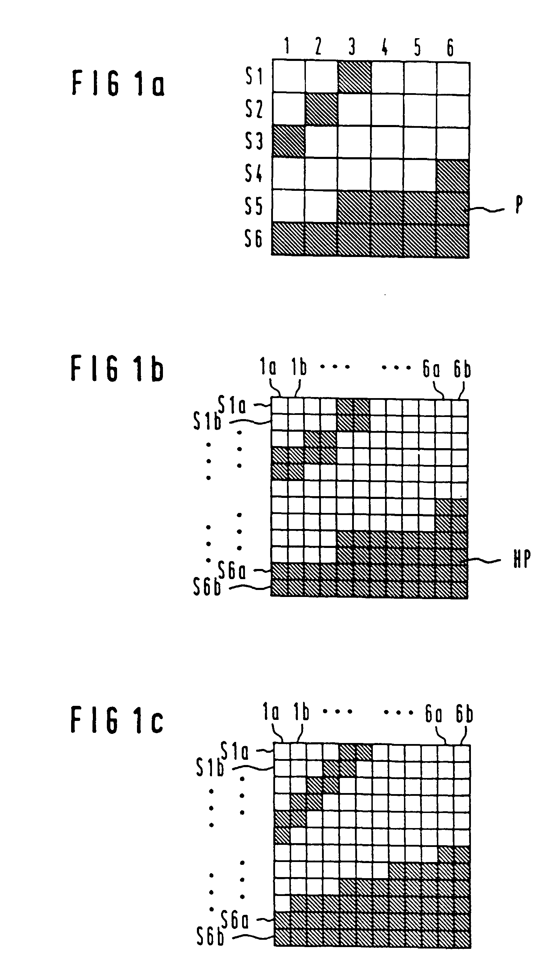

Die Bildinformation gemäß der Figur la, kann nun in eine Bildinformation gemäß der Figur 1b auf einfache Weise dadurch umgesetzt werden, indem sie durch vier entsprechende hochaufgelöste Pixel HP der 600-dpi-Matrix umgesetzt wird. Das gesetzte Pixel P der Spalte 2 und der Zeile S2 der 300-dpi-Matrix würde entsprechend in vier gesetzte hochaufgelöste Pixel HP in den Spalten 2a, 2b und den Zeilen S2a, S2b der 600-dpi-Matrix umgesetzt. Das Ergebnis dieser Umsetzung wäre eine Ausgabe der Bildinformation mit einem 600 dpi Ausgabegerät, die weitgehend der Ausgabe eines entsprechenden Ausgabegerätes mit einer Auflösung von 300 dpi entspricht. Die Treppenstrukturen des 300 dpi Bildes bleiben dabei praktisch vollständig erhalten und die Vorteile des hochauflösenden Ausgabegerätes bleiben ungenutzt.

Um die Vorteile des hochauflösenden Ausgabegerätes zu nutzen, zeigt die Erfindung eine Vorrichtung auf, mit der die groben Sprünge und Treppenstrukturen der niedrig aufgelösten Bildinformation geglättet werden können. Das Ergebnis einer solchen Glättung ist in Figur lc dargestellt.

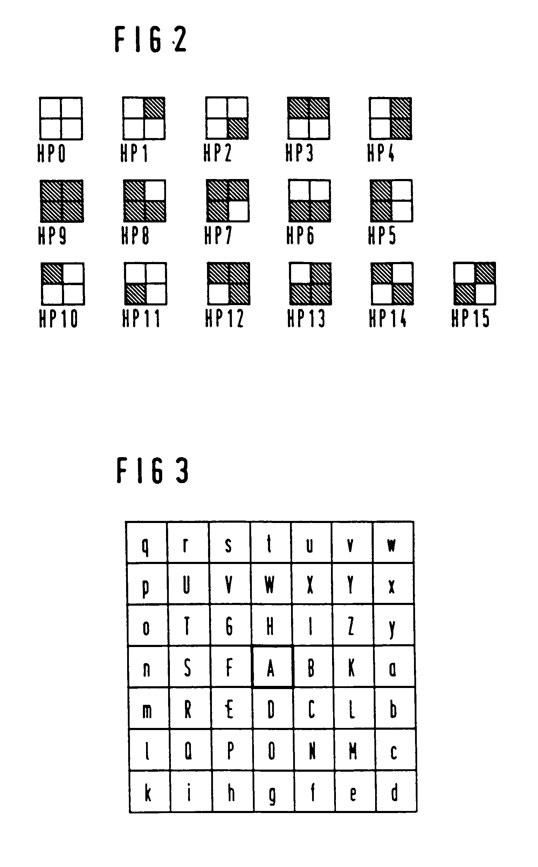

Jedes Pixel P der niederen Auflösung kann in vier Pixel HP der höheren Auflösung umgesetzt werden. Einem Originalpixel P können demnach maximal 2⁴ = 16 mögliche Kombinationen HP0...HP15 von Pixeln HP der hohen Auflösung zugeordnet werden. Diese möglichen Kombinationen von hochaufgelösten Pixeln HP0...HP15 sind in Figur 2 dargestellt. Aus diesen möglichen Kombinationen HP0...HP15 wird jeweils diejenige Kombination ausgewählt, die zur Glättung einer stufenartigen Struktur am besten geeignet ist.

Für die Entscheidung, welche der möglichen Kombinationen HP0...HP15 bei einer Umsetzung zu wählen ist, muß festgestellt werden, ob das auszugebende Pixel P Teil einer treppenartigen Struktur ist. Diese Entscheidung kann durch Betrachten eines umzusetzenden Pixels A, sowie bis zu 48 seiner Nachbarpixel B bis y, wie in Figur 3 dargestellt, erfolgen. Die Nachbarpixel B bis y bilden eine Matrix der Größe 7x7, deren zentrales Pixel P das umzusetzende Pixel A ist. Mittels dieser Matrix kann jedes einzelne Pixel P abgefragt und umgesetzt werden.

Um eine Abfrage zu ermöglichen müssen sowohl das umzusetzende Pixel A als auch seine Nachbarpixel B bis y transparent und damit abfragbar sein.

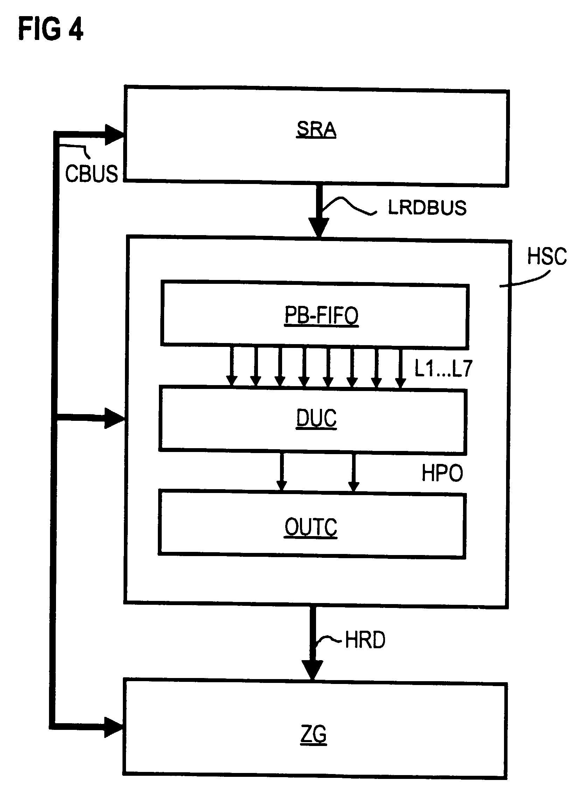

Eine Entscheidungseinheit DUC bestimmt, ob ein Pixel P einer Zeichenkante, einer schrägen Linie oder einem Grauschatten zuzuordnen ist. Um eine Betrachtung der großen Gruppe der Nachbarpixel durch eine Entscheidungseinheit DUC, siehe Figur 4, zu ermöglichen, wird beim Stand der Technik ein Matrix-schaltkreis verwendet. Ein Rastergenerator SRA erzeugt zeilenweise Pixel-Daten in einem seriellen Bitformat und taktet diese durch einen First-In-First-Out-Speicher FIFO. Der FIFO wird so groß gewählt, daß er in der Lage ist, einige aufeinanderfolgende Druckzeilen, wie beispielsweise sieben Zeilen, zur gleichen Zeit zu speichern. Dieser FIFO wird häufig unter Verwendung eines einzigen SRAM-Speichers realisiert. In Kombination mit einigen in Serie geschalteten Schieberegistern, beispielsweise sieben Register pro Druckzeile, können alle 49 Pixel zur gleichen Zeit von der Entscheidungseinheit DUC verarbeitet werden. Diese Architektur erlaubt lediglich eine niedrige Taktrate und ist deshalb nur für Drucker mit niedriger Geschwindigkeit, wie z.B. Tischlaserdrucker, geeignet.

In Hochgeschwindigkeitsdruckern, wo hohe Anforderungen an die Geschwindigkeit gestellt werden, wird eine Schaltkreiskonfiguration benötigt, die parallele Verarbeitungsmerkmale beinhaltet. Ein solche Merkmale aufweisender elektronischer Schaltkreis HSC ist gemäß Figur 4 zwischen einen Rastergenerator SRA und einen Zeichengenerator ZG eingefügt. Der elektronische Schaltkreis HSC setzt eine vom Rastergenerator SRA gelieferte Bildinformation geringer Auflösung in eine Bildinformation hoher Auflösung um. Als Ergebnis beschreiben die Ausgangsdaten des elektronischen Schaltkreises HSC jeden Teil der Eingangsdaten in hochaufgelöstem Format.

Das originale niedrig aufgelöste Bild, das vom Rastergenerator SRA erzeugt wurde, wird in Blöcke von Datenworten aufgeteilt, die sequentiell auf einem parallelen Eingangsbus LRDBUS, der beispielsweise eine Breite von 16 Bit aufweist, dem elektronischen Schaltkreise HSC zugeführt werden. Ein Datenwort enthält 16 Datenbits, die zu druckende Pixel repräsentieren.

Die Umsetzung der niedrig aufgelösten Bilddaten in hoch aufgelöste Bilddaten stellt einen Betriebsmodus dar. Es sind jedoch noch zwei andere Betriebsmodi möglich. Einer davon dient der Verarbeitung hoch aufgelöst er Bilddaten und ein anderer der Verarbeitung von niedrig aufgelösten Bilddaten jeweils in unveränderter Form. Es handelt sich demnach um Betriebsmodi, die auf eine Umwandlung der Bilddatenströme verzichten. Problematisch ist dabei die Verarbeitung der hoch aufgelösten Bilddaten, da dafür eine besondere Dimensionierung der Umsetzungseinheit HSC erforderlich ist. Darauf wird nachfolgend entsprechend eingegangen.

An der Umsetzung der Pixel sind im wesentlichen drei Komponenten beteiligt:

Der Parallelbus-FIFO-Speicher PB-FIFO, der gemäß einer besonderen Ausführungsform für umschaltbare Betriebsmodi in zwei logische Einzelkomponenten, einen Linemapper und einen Columnmapper zerlegbar ist.

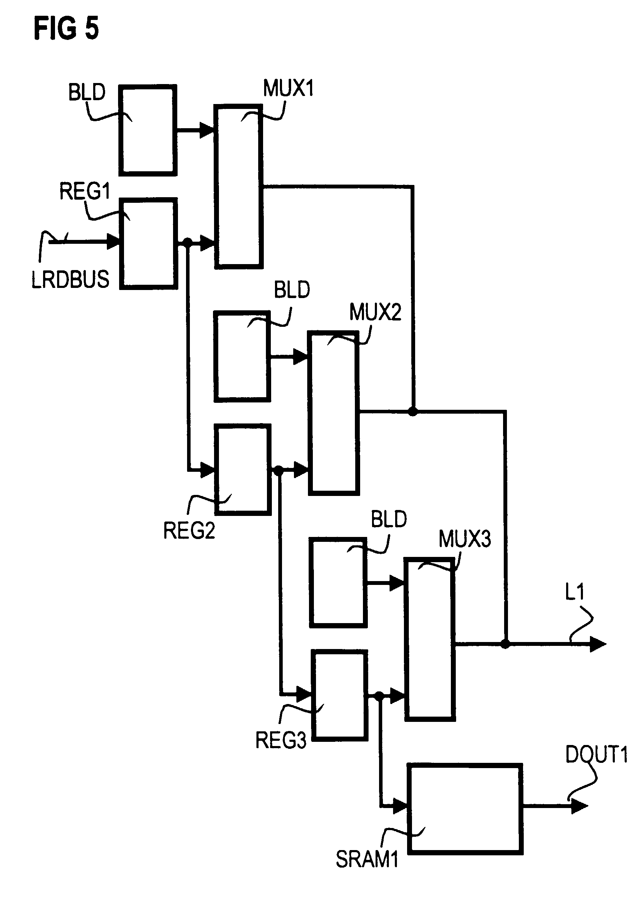

Jede Zeile von niedrig oder hoch aufgelösten Bildinformationen wird in eine Registerkette getaktet wird, die, wie in Figur 5 dargestellt, drei Register REG1, REG2, REG3 und einen SRAM-Speicher SRAM1 enthält. Alle Register REG1, REG2, REG3 und der SRAM-Speicher SRAM1 haben eine Breite von 32 Bit und stellen somit einen parallelen Bus-FIFO-Speicher PB-FIFO zur zeilenweisen Speicherung von Bildinformationen dar. Die Bildinformationen werden vom parallelen Eingangsbus LRDBUS, der mit dem Eingang des ersten Registers REG1 gekoppelt ist, an den Parallelbus-FIFO-Speicher PB-FIFO übergeben. Der Ausgang des ersten Registers REG1 ist über eine drei Bit breite Datenleitung mit dem Eingang eines ersten zwei zu eins Multiplexers MUX1 und über eine 32 Bit breite Datenleitung mit dem Eingang des zweiten Registers REG2 gekoppelt. Der Ausgang des zweiten Registers REG2 ist über eine 32 Bit breite Datenleitung mit dem Eingang eines zweiten zwei zu eins Multiplexers MUX2 und über eine 32 Bit breite Datenleitung mit dem Eingang des dritten Registers REG3 gekoppelt. Der Ausgang des dritten Registers REG3 ist über eine drei Bit breite Datenleitung mit dem Eingang eines dritten zwei zu eins Multiplexers MUX3 und über eine 32 Bit breite Datenleitung mit dem Eingang eines ersten SRAM-Speichers SRAM1 gekoppelt. Die Ausgänge des ersten, zweiten und dritten Multiplexers MUX1, MUX2, MUX3 sind zu einer 22 Bit breiten Datenleitung L1 zusammengefaßt, die mit der Entscheidungseinheit DUC gekoppelt ist (Figur 4). Der erste SRAM-Speicher SRAM1 übergibt mittels einer 32 Bit breiten Datenleitung Ausgangsdaten DOUT1 an eine nachfolgende Registerkette. Diese nachfolgende Registerkette weist einen identischen Aufbau auf.

Im ersten Betriebsmodus, in dem niedrig aufgelöste Bilddaten in hochaufgelöste Bilddaten umgewandelt werden sollen, werden von den 32 Bit, die zwischen den Registern REG1..REG3 übergeben werden nur 16 Bit verarbeitet. Im zweiten und dritten Betriebsmodus werden die 16 oder 32 Bit breiten Daten nur durch die Register REG1..REG3 zum SRAM-Speicher SRAM1 getaktet und nicht weiter bearbeitet.

Im ersten Bertriebsmodus ist der Eingangsspeicher als acht jeweils 8 Bit breite Speicher organisiert. Jeder einzelne 8 Bit breite Speicher enthält hierbei die Bildinformationen jeweils einer Zeile, wobei das 16 Bit breite Eingangsdatenformat im sogenannten "input data multiplexing Verfahren" in zwei 8 Bit breite Datenblöcke zerlegt und nacheinander in dem Speicher abgelegt wird. Es sind in sieben SRAM-Speichern SRAM1...SRAM7 die kompletten sieben zuvor übertragenen Zeilen gespeichert, die es dem Linemapper und den nachfolgenden Funktionseinheiten ermöglichen, die 7 x 7 Matrix für die Entscheidungseinheiten DUC aufzubauen. Dies geschieht durch zyklisches Auslesen der sieben 8 Bit breiten Speichereinheiten. Die achte Speichereinheit wird als Zeilenringpuffer parallel dazu mit den Bildinformationen der nächsten (achten) Zeile beschrieben.

Der Linemapper ordnet die von den Eingangsspeicher gelesenen Daten derart, daß an seinem 56 Bit breiten Ausgangsport die aktuellen Bildinformationen der letzten sieben Zeilen parallel zu jeweils 8 Bit zur Verfügung stehen. Hierbei sind den 56 Bit des Ausgangsports die Daten der letzten sieben Zeilen fest zugeordnet. Zwei zeitlich aufeinanderfolgende 8 Bit Daten entsprechen gemäß dem sogenannten "output data multiplexing Verfahren" den Bildinformationen des 16 Bit breiten Eingangsformats.

Beim zweiten Betriebsmodus, bei dem hochaufgelöste Bildinformationen übertragen werden, ist der Eingangsspeicher als acht jeweils 32 Bit breite Speicher organisiert. Jeder einzelne 32 Bit breite Speicher enthält hierbei die Bildinformationen jeweils einer Zeile. Die 32 Bit breiten Datenblöcke werden gemäß dem sogenannten "input data non multiplexing Verfahren" parallel und hintereinander in dem 32 Bit breiten Speicher abgelegt. Durch dieses Verfahren sind die kompletten sieben zuvor übertragenen Zeilen im Eingangsspeicher gespeichert. Dies ist notwendig, da die generelle Arbeitsweise des Linemappers unabhängig vom Betriebsmode ist. Der Linemapper liest hierbei die sieben Zeilen zuvor übertragenden Zeilen aus dem Eingangsspeicher, während parallel dazu die achte Speichereinheit mit den Bildinformationen der folgenden Zeile beschrieben wird.

Der Linemapper stellt an seinem 56 Bit breiten Ausgangsport die aktuellen Bildinformationen der letzten sieben Zeilen parallel zu jeweils 8 Bit zur Verfügung. Vier zeitlich aufeinanderfolgende 8 Bit Daten entsprechen den Bildinformationen des 32 Bit breiten Eingangsformats.

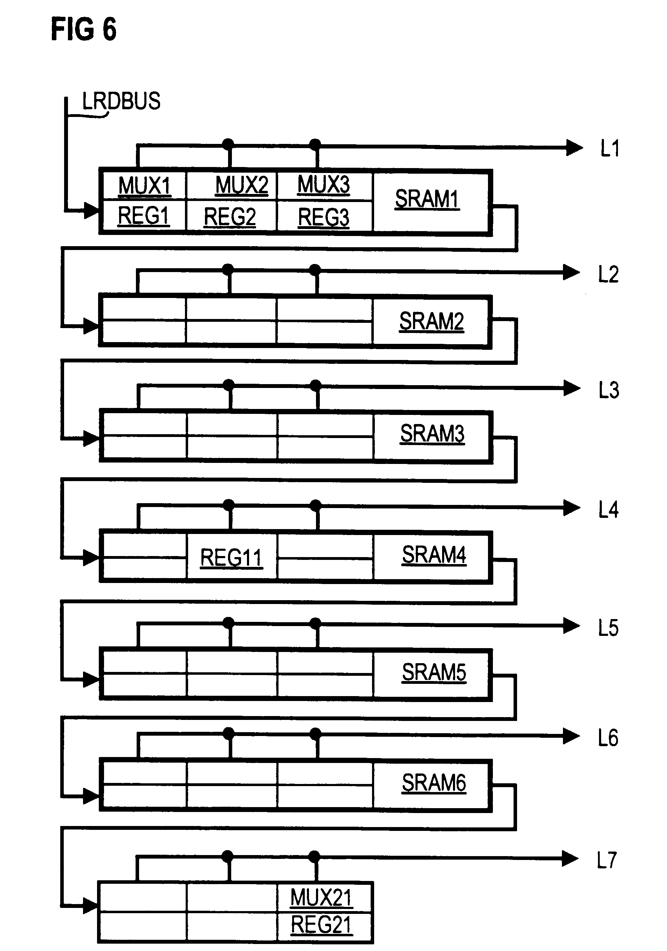

Der Parallelbus-FIFO-Speicher PB-FIFO enthält gemäß Figur 6 sieben im wesentlichen identisch aufgebaute Registerketten. Lediglich dem elften Register REG11 in der vierten Registerkette ist kein Multiplexer zugeordnet. Der Ausgang des elften Registers REG11 ist unmittelbar mit den jeweils drei Bit breiten Ausgängen des zehnten und des zwölften Multiplexers MUX10, MUX12 zu einer 22 Bit breiten Datenleitung L4 zusammengefaßt. Desweiteren fehlt am Ende der siebten Registerkette ein SRAM-Speicher. Der Parallelbus-FIFO-Speicher PB-FIFO ist damit in der Lage, etwa sieben aufeinanderfolgende Zeilen von mit 300 dpi aufgelösten Bildinformationen zu speichern und den Zugriff auf 16 aufeinanderfolgende Pixel einer Druckzeile mit all den diese Druckzeile umgebenden 48 Pixeln verfügbar zu machen.

Eine nicht dargestellte Adreßsteuerung Parallelbus-FIFO-Speichers PB-FIFO ist so konfiguriert, daß jeweils eine Gruppe von drei Registern REG1..REG21 und ein SRAM-Speicher SRAM1..SRAM6 genau eine Druckzeile mit 300 dpi-Auflösung aufnehmen können. Die SRAM-Speicher SRAM1..SRAM6 sind nach dem "First In First Out"-(FIFO-)Prinzip konfiguriert. Dies erlaubt eine wirkungsvolle Integration von hunderten von Registern des bei den Registern REG1..REG21 verwendeten Typs. Die SRAM-Speicher SRAM1..SRAM6 sind damit in der Lage eine große Datenmenge in kompakter Form zu speichern. Ein Zugriff ist jedoch je SRAM-Speicher SRAM1..SRAM6 nur auf einen einfachen Datenblock von 16 Bit zu einer Zeit möglich. Die Register REG1..REG21 der Registerketten ermöglichen einen gleichzeitigen Zugriff auf eine größere Datenmenge. Wenn die 300 dpi-Daten durch den Parallelbus-FIFO-Speicher PB-FIFO getaktet werden, durchqueren sie alle Register REG1..REG21 und SRAM-Speicher SRAM1..SRAM6.

Gemäß der besonderen Ausgestaltung ist dem 56 Bit breiten Ausgangsport des Linemappers der Columnmapper nachgeschaltet. Der Columnmapper ist hierzu mit einem 56 Bit breiten Eingangsport ausgestattet. Der Eingangsport ist zu sieben Zeilen mit 8 Bit Breite organisiert, was dem Ausgangsformat des Linemappers entspricht. Dem Eingangsport ist ein 7 Zeilen x 8 Bit x 4 (Tiefe) Registerarray nachgeschaltet. Von dem Eingangsport werden die gemultiplexten Daten der sieben Zeilen in ein nachgeschaltetes Registerarray von jeweils 8 Bit Breite und 4 Byte Tiefe gespeichert. Ein Byte des Arrays jeder Zeile wird beschrieben, während die anderen 3 Byte durch den nachgeschalteten 4 Byte Barrelshifter mit Rotationsfunktion auf das 14 Bit Breite Ausgangsregister jeder Zeile geschaltet werden. Die einzelnen Elemente am Ausgang des Barrelshifters enthalten somit einen Teil der jeweiligen Zeile. Durch das Abgreifen der oberen 3 Bit des Barrelshifters, das Abgreifen der 8 Bits des mittleren Teils des Barrelshifters und dem Abgreifen der unteren 3 Bit des Barrelshifters können die Eingangsdaten für die Entscheidungseinheiten DUC gewonnen werden. Die Daten werden an einem 98 Bit breiten Ausgangsregister abgespeichert und am Ausgangsport zur Verfügung gestellt.

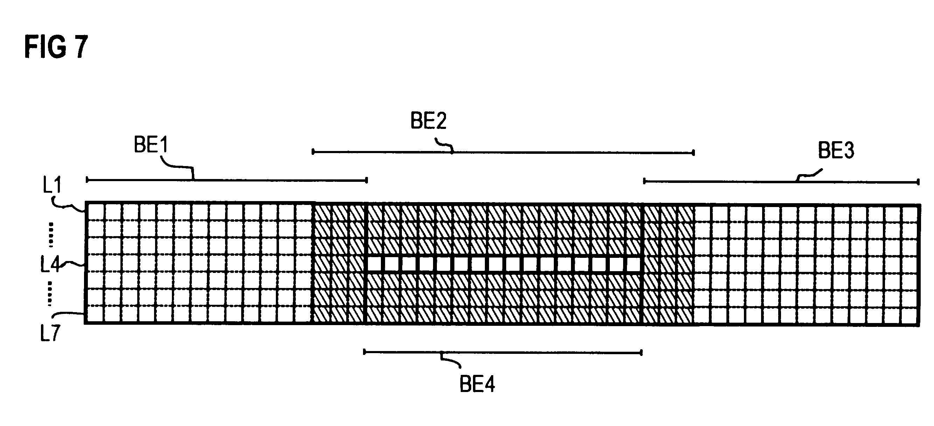

Figur 7 zeigt einen matrixartig angeordneten Ausschnitt von Daten sieben aufeinanderfolgender Zeilen einer niedrig aufgelösten Bildinformation. Diese Daten sind in den Registern REG1..REG21 gespeichert. Über die Datenleitungen L1..L7, die den Parallelbus-FIFO-Speicher PB-FIFO mit der Entscheidungseinheit DUC koppeln, ist ein sieben Zeilen und zweiundzwanzig Spalten umfassender Ausschnitt aus der niedrig aufgelösten Bildinformation transparent. Dieser transparente Bereich BE4 ist in der Figur 7 schraffiert dargestellt. Jedes Register REG1..REG21 enthält 16 Bit einer Zeile einer Bildinformation. Die Matrix, die die in den ersten Registern REG1, REG4, REG7, REG10, REG13, REG16, REG19 der Registerketten gespeicherte Bildinformation enthält, ist in der Figur 7 durch den ersten Bereich BE1 markiert. Diesem ersten Bereich BE1 unmittelbar angeschlossen ist ein zweiter Bereich BE2, der die in den zweiten Registern REG2, REG5, REG8, REG11, REG14, REG17, REG20 der Registerketten gespeicherte Bildinformation enthält. Diesem zweiten Bereich BE2 unmittelbar angeschlossen ist ein dritter Bereich BE3, der die in den dritten Registern REG3, REG6, REG9, REG12, REG15, REG18, REG21 der Registerketten gespeicherte Bildinformation enthält. Das zentrale Register REG11 enthält stets die in das 600 dpi-Format umsetzenden Pixel A1..A16. Die anderen, jeweils zur Umsetzung benötigten 48 Pixel P sind im zentralen, schraffierten Bereich BE4 zur Verarbeitung verfügbar.

In den meisten Druckanwendungen finden sich am Beginn und am Ende jeder Seite eine Anzahl von beispielsweise vier leeren, also druckbildfreien Zeilen. Für den Fall, daß diese Leerzeilen nicht vorhanden sind, würden die Daten von einer Seite auf nicht unterscheidbare Weise mit den Daten einer Folgeseite vermischt. Dies kann dadurch vermieden werden, daß der Ausgang jedes Registers REG1..REG10, REG12..REG21, mit Ausnahme des zentralen Registers REG11, mit dem Eingang eines zwei zu eins Multiplexers MUX1..MUX21 gekoppelt wird. Mit Hilfe der Multiplexer MUX1..MUX21 kann von den tatsächlich im Register REG gespeicherten Daten zu Blankdaten BLD, die am zweiten Eingang jedes Multiplexers MUX1..MUX21 anliegen, umgeschaltet werden.

Gemäß der besonderen Ausgestaltung wird dies dadurch vermieden, daß der Columnmapper am Seitenwechsel die letzten drei Zeilen der Seite und die ersten drei Zeilen der nachfolgenden Seite ausmaskiert. Am Ausgangsport des Columnmappers werden für die betreffenden Zeilen Blankdaten generiert.

Am Zeilenanfang stehen für die ersten drei Spalten der Entscheidungsmatrix keine sinnvollen Daten zur Verfügung. Entsprechendes gilt am Zeilenende für die drei letzten Spalten der Entscheidungsmatrix. Dies würde zu der Generierung von fehlerhaften Pixeldaten am Ausgang der Entscheidungseinheiten führen. Dies wird dadurch vermieden, daß der Columnmapper am Zeilenanfang die Daten des dritten Arrayelements für alle sieben Zeilen ausmaskiert, während am Zeilenende die Daten des ersten Arrayelements aller sieben Zeilen ausmaskiert werden. Am Ausgangsport des Columnmappers werden für die betreffenden Spalten Blankdaten generiert.

### Entscheidungseinheit DUC

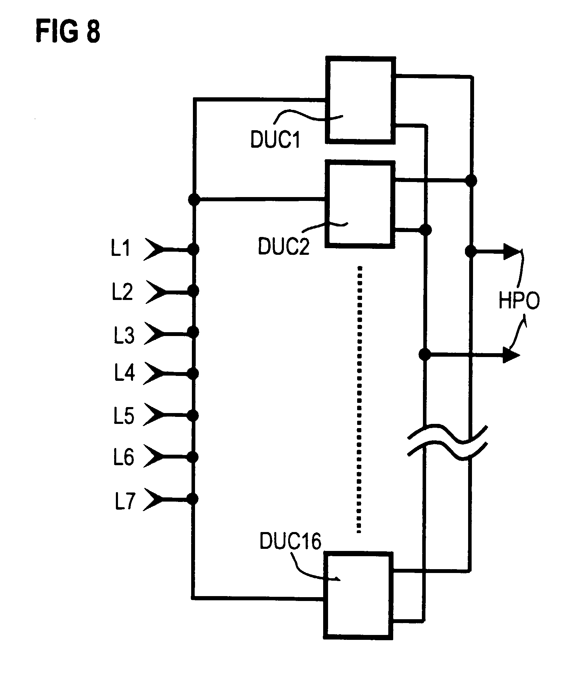

Die Entscheidungseinheit DUC enthält in festverdrahteter Form die Regeln zur Umsetzung der 300 dpi-Daten in 600 dpi-Daten. Es arbeiten, wie in Figur 8 gezeigt, 16 Entscheidungseinheiten DUC parallel und unabhängig voneinander, um 16 Pixel A1..A16 einer Auflösung von 300 dpi in 64 hochaufgelöste Pixel HP mit 600 dpi umzusetzen. Diese Daten werden in aufeinanderfolgende Zeilen mit 600 dpi aufgeteilt.

Während des Umsetzungsvorgangs verwertet jede Entscheidungseinheit DUC die 48 benachbarten Pixel eines umzusetzenden Pixels A1..A16 im 300 dpi-Raster. Um die Betrachtung der das umzusetzende Pixel A1..A16 umgebenden Pixel P zu ermöglichen, werden die 49 Eingänge jeder Entscheidungseinheit DUC mit einer Auswahl von Leitungen aus den sieben 22 Bit breiten Datenleitungen L1..L7 gekoppelt. Zur Umsetzung des Pixels A1, das ist in der Figur 7 das Pixel A1 in der Zeile 4 in Spalte 17, werden beispielsweise mit der ersten Entscheidungseinheit DUC1 die Leitungen gekoppelt, die den Kreuzungspunkten der Spalten 14 bis 20 und der Zeilen 1 bis 7 zugeordnet sind.

Jede Entscheidungseinheit DUC1..DUC16 enthält nur nicht getaktete Logik, wie NAND- und NOR-Gatter und erzeugt mindestens vier Ausgangssignale HPO, die die vier hochaufgelösten Pixel HP repräsentieren, die aus einem 300 dpi-Pixel A erzeugt wurden. Die Generierungszeit für die hochaufgelösten Daten hängt nur von der Signallaufzeit durch die Entscheidungseinheiten DUC ab. Wenn der Druckkopf des Zeichengenerators ZG in der Lage ist, den Durchmesser der hochaufgelösten Pixel zu modulieren, dann werden entsprechend mehr Ausgangssignale HPO der Entscheidungseinheiten DUC benötigt.

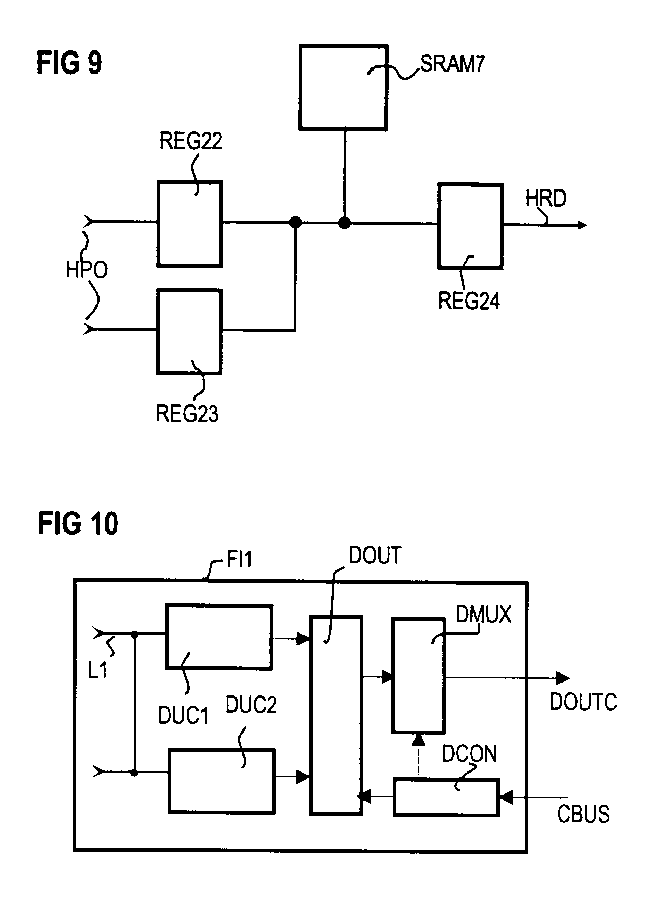

Gemäß der besonderen Ausgestaltung (Figur 10) mit umschaltbaren Betriebsmodi enthalten die Entscheidungseinheiten DUC in festverdrahteter Form die Regeln zur Umsetzung der 300 dpi-Daten in 600 dpi-Daten. Es arbeiten 8 Entscheidungseinheiten DUC gemultiplext parallel und unabhängig voneinander, um 8 Pixel A1..A8 einer Auflösung von 300 dpi in 32 hochaufgelöste Pixel HP mit 600 dpi umzusetzen. Diese Daten werden in aufeinanderfolgende Zeilen mit 600 dpi aufgeteilt.

Während des Umsetzungsvorgangs verwertet jede Entscheidungseinheit DUC die 48 benachbarten Pixel eines umzusetzenden Pixels A1..A8 im 300 dpi-Raster. Um die Betrachtung der das umzusetzende Pixel A1..A8 umgebenden Pixel P zu ermöglichen, werden die 49 Eingänge jeder Entscheidungseinheit DUC mit einer Auswahl von Leitungen aus dem 98 Bit breiten Ausgangsport des Columnmappers gekoppelt. Zur Umsetzung des Pixels A1, das ist in der Figur 7 das Pixel A1 in der Zeile 4 in Spalte 17, werden beispielsweise mit der ersten Entscheidungseinheit DUC1 die Leitungen gekoppelt, die den Kreuzungspunkten der Spalten 14 bis 20 und der Zeilen 1 bis 7 zugeordnet sind.

Jede Entscheidungseinheit DUC1..DUC8 enthält nur nicht getaktete Logik, wie NAND- und NOR-Gatter und erzeugt mindestens vier Ausgangssignale HPO, die die vier hochaufgelösten Pixel HP repräsentieren, die aus einem 300 dpi-Pixel A erzeugt wurden. Die Generierungszeit für die hochaufgelösten Daten hängt nur von der Signallaufzeit durch die Entscheidungseinheiten DUC ab. Wenn der Druckkopf des Zeichengenerators ZG in der Lage ist, den Durchmesser der hochaufgelösten Pixel zu modulieren, dann werden entsprechend mehr Ausgangssignale HPO der Entscheidungseinheiten DUC benötigt.

Die Entscheidungseinheiten sind gemäß Figur 10 in eine Filtereinheit integriert. Dies dient zur Unterscheidung der verschiedenen Betriebsmodi. Die Filtereinheit ist in Filterbausteine FI1 ...FI4 gegliedert. Die Filtereinheit enthält vier identische Filterbausteine FI1 ...FI4, die jeweils zwei Entscheidungseinheiten DUC, ein Ausgangsregister DOUT mit Multiplexer DMUX und eine Steuerung DCON enthalten. Das Ausgangsregister DOUT übernimmt die Daten aus den Entscheidungseinheiten DUC. Der Multiplexer DMUX wählt gesteuert durch die Steuerung DCON die jeweils benötigten Daten aus dem Ausgangsregister DOUT aus.

Werden niedrig aufgelöste Daten übertragen, dann werden die gemultiplexten Ausgangsdaten des Columnmappers byteweise zu sieben Zeilen an die Filterbausteine FI1 ...FI4 geführt und gelangen über den 56 Bit breiten Eingangsport direkt an die beiden Entscheidungseinheiten DUC1 ...DUC8. Die Entscheidungseinheiten generieren aus ihrer jeweiligen 7 x 7 Matix ein 4 Bit Ergebnis. Diese 4 Bit sind die Umsetzung der niedrig aufgelösten Druckinformation des mittleren Druckdatums der Matrix in die hochaufgelöste Druckinformation. Zwei Bit des Ergebnisses sind die Erhöhung der Auflösung in horizontaler Richtung und zwei Bit sind die Erhöhung der Auflösung in vertikaler Richtung. Diese zwei Bit sind Druckdaten der nachfolgenden hochaufgelösten Zeile. Die beiden 4 Bit Ergebnisse der zwei Entscheidungseinheiten DUC1...DUC8 werden in einem 8 Bit breiten Register DOUT gespeichert. Der nachgeschaltete Multiplexer DMUX stellt am 4 Bit breiten Ausgangsport zeitlich gemultiplext die 4 Bit der ersten Ausgangszeile und anschließend die 4 Bit der folgenden Ausgangszeile zur Verfügung.

Werden hochaufgelöste Daten übertragen werden die gemultiplexten Druckbildinformationen, die über einem speziellen Port zugeführt werden, an den Entscheidungseinheiten DUC1...DUC8 vorbeigeschleift und ohne Modifikation in das 8 Bit breite Ausgangsregister DOUT eingeschrieben. Der nachgeschaltete Multiplexer stellt am 4 Bit breiten Ausgangsport zeitlich gemultiplext die 4 Bit des hochaufgelösten Datums und anschließend die restlichen 4 Bit des hochaufgelösten Datums zur Verfügung. Ein Achtel des gemultiplexten 32 Bit breiten Datenworts, das die Druckbildinformation einer Zeile enthält, steht somit zur Weiterverarbeitung am Ausgangsport zur Verfügung.

### Ausgangsschaltkreis OUTC

Die prinzipielle Funktionsweise des Ausgangsschaltkreises OUTC ist in Figur 9 dargestellt. Er sorgt dafür, daß die hochaufgelösten 600 dpi-Daten zeilenweise ausgegeben werden können, obwohl sie von den Entscheidungseinheiten DUC1..DUC7 simultan erzeugt werden. Dazu werden die Ausgangssignale HPO der Entscheidungseinheiten DUC1..DUC7 an die Eingänge zweier Register REG22, REG23 geführt. Deren Ausgänge sind mit einer Speichereinheit SRAM7 gekoppelt, wo die Ausgangssignale zeilenweise zwischengespeichert werden.

Die hochaufgelösten 600 dpi-Daten werden von der Speichereinheit SRAM7 zum Eingang eines Registers REG24 ausgelesen. Von diesem werden die hochaufgelösten 600 dpi-Daten auf einen 32 Bit breiten Bus HPO gegeben, der die Daten zum Zeichengenerator ZG überträgt. Die Ausgabe der Zeilen erfolgt, während eine nachfolgende 300 dpi-Zeile in den Parallelbus-FIFO-Speicher PB-FIFO getaktet wird. Durch die doppelte Breite des Ausgabebusses HRD gegenüber dem Eingangsbus LRDBUS werden die hochaufgelösten Daten mit einer doppelt so hohen Rate ausgelesen, wie die 300 dpi-Daten eingelesen werden.

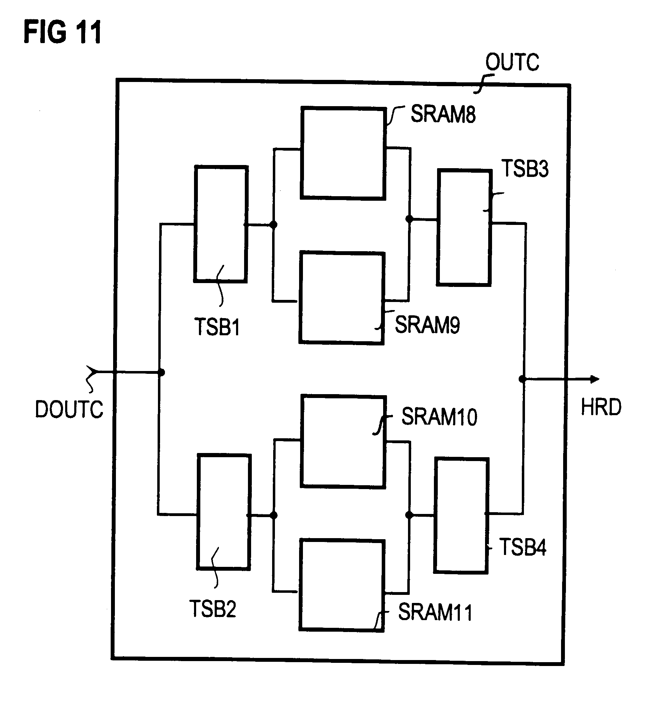

In der besonderen Ausführungsform ist der Ausgangsschaltkreis OUTC gemäß Figur 11 ausgestaltet. Der Ausgangsschaltkreis OUTC sorgt dafür, daß die hochaufgelösten Daten zeilenweise ausgegeben werden können, obwohl die Entscheidungseinheiten DUC gemultiplext zwei Zeilen erzeugen. Der Aufbau entspricht einer FIFO Nachbildung durch SRAMs und sogenannte "tri-state-buffer" TSB. Die vier Bit breiten Ausgangsports DOUTC der vier Filterbausteine FI1...FI4 werden zu einem 16 Bit breiten Datenbus zusammengefaßt und parallel mit vier 16 Bit breite tri-state-buffern TSB1, TSB2 verbunden. Jeweils zwei buffer TSB1, TSB2 sind einander zugeordnet und bilden den Eingang DOUTC des Ausgangsschaltkreises OUTC. Sie werden gleichzeitig freigeschaltet. Die zwei anderen buffer TSB3, TSB4 sind gesperrt. Den buffern TSB1, TSB2 nachgeschaltet sind jeweils 32 Bit breite bidirektionale Speicher SRAM8...SRAM11 die wortweise (16 Bit) beschreibbar sind. Beide Speicher SRAM8..SRAM9, SRAM10..SRAM11 sind derart dimensioniert, daß in jedem Speicher SRAM8..SRAM9, SRAM10..SRAM11 mindestens zwei hochaufgelöste Zeilen abgespeichert werden können. Den Speicherpaaren SRAM8..SRAM9, SRAM10..SRAM11 sind jeweils ein 32 Bit breiter tri-state-buffer TSB3, TSB4 nachgeschaltet, die den Ausgang HRD des Ausgangsschaltkreises OUTC bilden. Dieser buffer TSB3, TSB4 wird invers zum buffer TSB1, TSB2 des Eingangs betrieben. Es darf immer nur ein Ausgangs-buffer TSB3, TSB4 freigeschaltet werden.

Das Beschreiben der Speicher SRAM8..SRAM9, SRAM10..SRAM11 mit den hochaufgelösten Daten der Filter ist abhängig von dem Betriebsmode des elektronischen Schaltkreises HSC. Werden hochaufgelöste Daten übertragen, stellen zwei aufeinanderfolgende 16 Bit Daten des Filterbausteins FI die Druckdateninformation einer Zeile dar. Die aufeinanderfolgenden Datenworte werden wortweise in den 32 Bit Speichern SRAM8..SRAM9, SRAM10..SRAM11 gespeichert. Die Adresse wird anschließend inkrementiert ( zwei Schreibzugriffe ).

Werden niedrigaufgelöste Daten übertragen, stellen zwei aufeinanderfolgende 16 Bit Daten des Filterbausteins FI die halbe Druckdateninformation zweier aufeinanderfolgender Zeilen dar. Die Datenworte werden wortweise in einem ersten 16 Bit breiten Teil eines Speichers SRAM8..SRAM9, SRAM10..SRAM11 gespeichert, wobei die Adresse um die maximale Zeilentiefe durch toggeln des höchstwertigsten Adreßbits inkrementiert wird. Die nachfolgenden zwei Datenworte werden in dem anderen 16 Bit breiten Teil des jeweiligen Speichers SRAM8..SRAM9, SRAM10..SRAM11 gespeichert. Die Adresse wird anschließend inkrementiert. Insgesamt sind somit vier Schreibzugriffe erforderlich.

Parallel zu dem Beschreiben des einen 32 Bit breiten Speichers SRAM8..SRAM9 können aus dem anderen 32 Bit breiten Speicher SRAM10..SRAM11 vollkommen asynchron die hochaufgelösten Daten ausgelesen werden. Ist einer der 32 Bit Speicher SRAM8..SRAM9, SRAM10..SRAM11 geleert, wird er erneut mit hochaufgelösten Daten beschrieben, während der andere beschriebene 32 Bit Speicher SRAM10..SRAM11, SRAM8..SRAM9 gelesen werden kann. Dieser Mechanismus setzt voraus, daß das Füllen der Speicher SRAM8..SRAM9, SRAM10..SRAM11 schneller erfolgt, als das Leeren der Speicher SRAM8..SRAM9, SRAM10..SRAM11.

Die Ausgabe der Zeilen erfolgt, während eine nachfolgende Zeile vom Linemapper in den Eingangsspeicher übertragen wird. Durch die doppelte Breite des Ausgabedatenbusses HRD gegenüber dem Eingangsdatenbus LRDBUS werden die hochauflösenden Daten mit einer doppelt so hohen Datenrate ausgelesen, wie die niedrigaufgelösten Daten eingelesen werden. Werden hochaufgelöste Eingangsdaten übertragen, ist die Ausgabedatenrate gleich hoch wie die Eingabedatenrate.

### Ablaufsteuerung, Sequencer

Im nicht dargestellten Sequencer ist die gesamte Ablaufsteuerung des elektronischen Schaltkreises HSC integriert. Hierzu zählt die Adreß-, Writesignal- und Readsignalgenerierung der Input-Speicher SRAMs, die Adreßzähler für den Line- und Columnmapper, die Adreß- und Writesignalgenerierung der Output-SRAM-FIFOs. Die Steuersignale des Parallelinterfaces zwischen dem Rastergenerator SRA und dem Translator der Zeichengeneratorsteuerung ZG werden vom Sequencer ausgewertet und die Gegenseite emuliert.

Ein Steuerbus CBUS ist mit dem Rastergenerator, dem elektronischen Schaltkreis HSC und dem Zeichengenerator ZG gekoppelt. Wenn der Rastergenerator SRA eine Seite von Bildinformationen erzeugt hat, meldet er dies über den Steuerbus CBUS der Steuerungselektronik des Zeichengenerators ZG. Diese erkennt dann, daß Daten verfügbar sind. Der Parallelbus-FIFO-Speicher PB-FIFO und der Ausgangsschaltkreis OUTC müssen nun zurückgesetzt werden, wenn es sich um die erste zu druckende Seite nach dem Einschalten des Druckers handelt. Wenn jedoch gerade eine Seite gedruckt worden war, müssen während die neue Seite durch den Parallelbus-FIFO-Speicher PB-FIFO getaktet wird, die ersten zehn Multiplexer MUX1..MUX10, die mit den Register REG1..REG10 gekoppelt sind, dann zum Eingang mit den Leerzeichen BLD umgeschaltet werden, wenn die neuen Daten die entsprechenden Register REG1..REG10 erreichen. Der Zeichengenerator ZG sendet ein Datentaktsignal zum Rastergenerator SRA um den ersten Block der 300 dpi-Daten auf dem Eingangsbus LRDBUS zu plazieren. Diese Daten werden mit der steigenden Flanke des Datentaktsignals in den Parallelbus-FIFO-Speicher PB-FIFO getaktet. Alle nachfolgenden Datentaktimpulse schieben den jeweils nachfolgenden 300 dpi-Datenblock in den Parallelbus-FIFO-Speicher PB-FIFO und schieben die anderen Daten im Parallelbus-FIFO-Speicher PB-FIFO weiter. Der Rastergenerator SRA überträgt die 300 dpi-Daten stets zeilenweise, und innerhalb einer Zeile werden die Datenblöcke sequentiell auf dem 16 Bit Bus beispielsweise die Pixel 0 bis 15, die Pixel 16 bis 31, die Pixel 32 bis 47 usw. plaziert.

Wenn die Daten für die neue Seite, das elfte Register REG11 erreicht haben, kann die Entscheidungseinheit DUC, die 64 entsprechenden hochaufgelösten Ausgangspixel HP erzeugen und in der Speichereinheit SRAM7 des Ausgangsschaltkreises OUTC speichern. Weitere 600 dpi-Daten werden mit jedem nachfolgenden Datentaktimpuls erzeugt. Nachdem die zwei kompletten Zeilen aus 600 dpi-Daten aus einer Zeile von 300 dpi-Daten erzeugt worden sind, können die 600 dpi-Bildinformationen dieser Zeilen, die in der Speichereinheit SRAM7 des Ausgangsschaltkreises OUTC gespeichert sind, auf dem 32 Bit Ausgangsbus HRD mit der doppelten Frequenz der nachfolgenden 300 dpi-Zeile ausgelesen werden. Diese 600 dpi-Daten müssen nun in den LED-Druckkamm des Zeichengenerators eingeschrieben werden, bevor der eigentliche Druck beginnen kann.

Durch die beschriebene Bildinformationsaufbereitung wird der Datentransfer zwischen dem Rastergenerator SRA und dem Zeichengenerator ZG um mehr als vier niedrig aufgelöste Druckzeilendauern verzögert. Diese Verzögerung muß bei der Drukkersteuerung berücksichtigt und kompensiert werden. Wenn der Rastergenerator SRA den letzten 300 dpi-Datenblock der aktuellen Seite auf den Datenbus übertragen hat, gibt der Rastergenerator SRA ein Signal an den Steuerbus CBUS. Dieses Signal kann dazu genutzt werden, die ersten zehn Multiplexer MUX1..MUX10 des Parallelbus-FIFO-Speichers PB-FIFO rechtzeitig umzuschalten, bevor die neuen Daten die den Multiplexern MUX1..10 zugeordneten Register REG1..REG10 erreichen. Dies stellt sicher, daß die Entscheidungseinheiten DUC1..DU16 die Daten einer Seite nicht mit den Daten der Folgeseite vermischen. Wenn die Bildinformationen einer neuen Seite endgültig in das Register REG11 übergeben sind, dann werden die Multiplexer MUX1..MUX10 wieder umgeschaltet und der Ausgang der Register REG1..REG10 damit durch die Multiplexer MUX1..MUX10 weitergegeben. Zur gleichen Zeit werden die Multiplexer MUX12..MUX21, die mit den Registern REG12.. REG21 gekoppelt sind, auf die Blankdaten umgeschaltet. Jeder dieser nachfolgenden Multiplexer MUX12..MUX21. wird erst dann die Verbindung zum entsprechenden Register REG12..REG21 durchschalten, wenn der erste Block mit Druckdaten, der der neuen Seite angehört, das jeweilige Register REG12..REG21 erreicht hat.

Obwohl das oben beschriebene Beispiel eine Umsetzung von Bildinformationen mit 300 dpi-Auflösung in 600 dpi aufgelöste Daten beschreibt, kann die Schaltung auch für eine andere Umsetzung, beispielsweise von 240 dpi auf 480 dpi, von 300 dpi nach 900 dpi usw. angewendet werden. Der Gebrauch eines 16 Bit und eines 32 Bit Datenbusses für Ein- und Ausgang, ist nicht zwangsweise erforderlich. Änderungen am Registerdesign und am Zeitdiagramm können vorgenommen werden, um andere Bus-breiten zu unterstützen. Schließlich kann die Erfindung bei entsprechendem Algorithmus in der Umsetzungseinheit DUC an Stelle der Daten in zwei Pegeln (ohne Steuerung des Pixeldurchmessers) in einen Mehr-Pegel-Bildinformationsdatenstrom (variable Pixeldurchmesser) geändert werden.

## Patentansprüche

1. Vorrichtung zur Steigerung der Druckqualität in Hochgeschwindigkeitsdruck- und kopiergeräten, die eine matrixartige Bildinformation niedriger Auflösung auf einer Bildwiedergabeeinheit (ZG) zur Wiedergabe einer matrixartigen Bildinformation hoher Auflösung ausgeben, wobei eine Rastereinheit (SRA) zur Generierung der matrixartigen Bildinformation niedriger Auflösung und die Bildwiedergabeeinheit (ZG) mittels einer Funktionseinheit (HSC) gekoppelt sind, dadurch gekennzeichnet, daß die Funktionseinheit (HSC) enthält:
- eine Registereinheit (PB-FIFO), der Datenworte der Bildinformation zuführbar sind und an deren Ausgängen auf eine Mehrzahl von Datenworten parallel zugegriffen werden kann,
- eine mit den Ausgängen der Registereinheit gekoppelte Entscheidungseinheit (DUC), die die von der Registereinheit (PB-FIFO) zur Verfügung gestellten Datenworte zur Umsetzung eines umzusetzenden Pixels (A1..A16) niedriger Auflösung in eine Matrix von Pixeln (HP) hoher Auflösung auswertet, und
- eine mit der Entscheidungseinheit (DUC) gekoppelte Ausgabeeinheit (OUTC), die die Matrizen von Pixeln (HP) hoher Auflösung zu einer matrixartigen Bildinformation hoher Auflösung verbindet und an die Bildwiedergabeeinheit (ZG) ausgibt.

2. Vorrichtung nach Anspruch 1, deren Registereinheit (PB-FIFO) mindestens zwei in Serie geschaltete Registerketten enthält, die jeweils in der Lage sind, die Bildinformation einer Spalte oder Zeile aufzunehmen.

3. Vorrichtung nach Anspruch 2, deren Registerketten jeweils mindestens ein Register (REG1..REG21) enthalten, das die Bildinformationsdaten in der Breite eines Datenwortes aufnimmt und abgibt, wobei am Ende jeder Registerkette, die Daten an eine nachfolgende Registerkette abgibt, ein Stapelspeicher (SRAM1..SRAM6) vorgesehen ist.

4. Vorrichtung nach einem der Ansprüche 2 oder 3, bei der die Register (REG..REG10, REG12..REG21), die die Pixel (P) in der Umgebung des umzusetzenden Pixels (A1..A16) enthalten, an ihren Ausgängen mit Multiplexern (MUX1..MUX10, MUX12..MUX21) gekoppelt sind, über deren zweite Eingänge vorbestimmte Bilddaten eingebbar sind.

5. Vorrichtung nach einem der vorhergehenden Ansprüche mit einer Entscheidungseinheit (DUC), die sich aus einer Mehrzahl von einzelnen Entscheidungseinheiten (DUC1..DUC16) zusammensetzt, von denen jede unabhängig von den anderen eine Umsetzung eines umzusetzenden Pixels (A1..A16) in eine Matrix von hochaufgelösten Pixeln (HP) durchführt.

6. Vorrichtunq nach einem der vorhergehenden Ansprüche mit einer Funktionseinheit (HSC) die in mindestens zwei Betriebsmodi schaltbar ist, mit denen wahlweise die Umwandlung der Bildinformation niedriger Auflösung in eine Bildinformation hoher Auflösung abschaltbar ist.

## Claims

1. Device for increasing the print quality in highspeed printing and copying devices which output matrix-like low-resolution image information on an image reproduction unit (ZG) in order to reproduce matrix-like high-resolution image information, a raster unit (SRA) for generating the matrix-like low-resolution image information and the image reproduction unit (ZG) being coupled by means of a functional unit (HSC), characterized in that the functional unit (HSC) contains:
- a recording unit (PB-FIFO), to which data words of the image information can be fed and at whose outputs a plurality of data words can be accessed in parallel,
- a decision unit (DUC) which is coupled to the outputs of the recording unit and which evaluates the data words made available by the recording unit (PB-FIFO) in order to convert a low -resolution pixel (A1..A16), which is to be converted, into a matrix of high-resolution pixels (HP), and
- an output unit (OUTC) which is coupled to the decision unit (DUC) and which connects the matrices of high-resolution pixels (HP) to form an item of matrix-like high-resolution image information and outputs it to the image reproduction unit (ZG).

2. Device according to Claim 1, whose recording unit (PB-FIFO) contains at least two recording chains which are connected in series and which are each capable of holding the image information of a column or a line.

3. Device according to Claim 2, whose recording chains each contain at least one register (REG1..REG21) which holds, and outputs, the image information data with the width of one data word, a stack (SRAM1..SRAM6) being provided at the end of each register chain which outputs data to a following register chain.

4. Device according to one of Claims 2 or 3, in which the registers (REG..REG10, REG12..REG21), which contain the pixels (P) in the vicinity of the pixel (A1..A16) which is to be converted, are coupled at their outputs to multiplexers (MUX1..MUX10, MUX12..MUX21) via whose second inputs predefined image data can be input.

5. Device according to one of the preceding claims, having a decision unit (DUC) which is composed of a plurality of individual decision units (DUC1..DUC16), each of which carries out, independently of the others, a conversion of a pixel (A1..A16), which is to converted, into a matrix of high-resolution pixels (HP).

6. Device according to one of the preceding claims having a functional unit (HSC) which can be switched into at least two operating modes with which there is the option of switching off the conversion of the low-resolution image information into an item of high-resolution image information.

## Revendications

1. Dispositif pour améliorer la qualité d'impression dans des appareils d'impression et de reproduction à grande vitesse qui transmettent une information d'image matricielle de faible résolution à une unité de reproduction d'image (ZG) destinée à la reproduction d'une information d'image matricielle de haute résolution, dans lequel une unité de tramage (SRA) destinée à engendrer l'information d'image matricielle de faible résolution et l'unité de reproduction d'image (ZG) sont couplées au moyen d'une unité fonctionnelle (HSC), caractérisé en ce que l'unité fonctionnelle (HSC) contient :
- une unité de registre (PB-FIFO) à laquelle des mots de données de l'information d'image peuvent être envoyés, et aux sorties de laquelle on peut prendre en parallèle une multiplicité de mots de données,
- une unité de décision (DUC) couplée aux sorties de l'unité de registre et qui analyse les mots de données fournis par l'unité de registre (PB-FIFO) pour transformer un pixel à transformer (A1..A16) de faible résolution en une matrice de pixels (HP) de haute résolution, et
- une unité de sortie (OUTC) couplée à l'unité de décision (DUC), qui combine les matrices de pixels (HP) de haute résolution en une information d'image matricielle de haute résolution et les transmet à l'unité de reproduction d'image (ZG).

2. Dispositif selon la revendication 1, dont l'unité de registre (PB-FIFO) renferme au moins deux chaînes de registres connectées en série, qui sont respectivement en mesure de recevoir l'information d'image d'une colonne ou d'une ligne.

3. Dispositif selon la revendication 2, dont les chaînes de registres comprennent chacune au moins un registre (REG1..REG21) qui reçoit et émet les données d'information d'image dans la largeur d'un mot de donnée, une mémoire de sauvegarde (SRAM1..SRAM6) étant prévue à l'extrémité de chaque chaîne de registres qui transmet les données à une chaîne de registres suivante.

4. Dispositif selon une des revendications 2 et 3, dans lequel les registres (REG1..REG10, REG12..REG21) qui contiennent les pixels (P) situés dans le voisinage du pixel (A1..A16) à transformer, sont couplés à leurs sorties à des multiplexeurs (MUX1..MUX10, MUX12..MUX21) par l'intermédiaire des deuxièmes entrées desquels des données d'image prédéterminées peuvent être introduites.

5. Dispositif selon une des revendications précédentes, comprenant une unité de décision (DUC) qui se compose d'une multiplicité d'unités de décision élémentaires (DUC1..DUC16) dont chacune exécute indépendamment des autres une transformation d'un pixel à transformer (A1... .A16) en une matrice de pixels à haute résolution (HP).

6. Dispositif selon une des revendications précédentes, comprenant une unité fonctionnelle (HSC) qui peut être basculée dans au moins deux modes de fonctionnement avec lesquels la transformation de l'information d'image de faible résolution en une information d'image de haute résolution peut être arrêtée.
